# EUROPEAN PATENT APPLICATION

(11) **EP 4 361 587 A2**
(43) Date of publication of application: **01.05.2024**
(21) Application number: 23205909.7
(22) Date of filing: 25.10.2023
(51) Int. Cl.: G01L 5/24, G01M 5/00

(54) **MONITORING A MECHANICAL CONNECTION**

(30) Priority: 28.10.2022 GB 202216002
(71) Applicant: Airbus Operations Limited, Bristol BS34 7PA (GB)
(72) Inventor: RIVERA, Luis, Bristol BS34 7PA (GB)
(74) Representative: EIP

(57) **Abstract**

Disclosed is a method of monitoring a mechanical connection between a first aircraft component and a second aircraft component. The method comprises securing, using a securing device, the first aircraft component to the second aircraft component; obtaining information indicative of an acoustic signal emitted during the securing the first aircraft component to the second aircraft component; and inputting the information indicative of the acoustic signal into a machine learning model. The machine learning model is configured to provide an output indicative of a fault condition of the mechanical connection.

## Description

### TECHNICAL FIELD

The present invention relates to a method of monitoring a mechanical connection between a first aircraft component and a second aircraft component, a system for securing a first aircraft component to a second aircraft component, and a method of determining a characteristic of a mechanical connection between a first aircraft component and a second aircraft component.

### BACKGROUND

Aircraft components may be secured to each other, for example by using fasteners. In some situations, these fasteners are in difficult to access areas, which may make inspection difficult and time consuming.

### SUMMARY

According to a first aspect of the present invention, there is provided a method of monitoring a mechanical connection between a first aircraft component and a second aircraft component, the method comprising: securing, using a securing device, the first aircraft component to the second aircraft component; obtaining information indicative of an acoustic signal emitted during the securing the first aircraft component to the second aircraft component; and inputting the information indicative of the acoustic signal into a machine learning model, wherein the machine learning model is configured to provide an output indicative of a fault condition of the mechanical connection.

The method according to the first aspect of the present invention may allow the fault condition to be determined without the need to manually inspect each mechanical connection (e.g. through visual and/or physical inspection). This may speed up the securing process, and therefore the overall assembly process. This may also allow the securing process to be automated, as visual inspection is not required/required less often. The fault condition may indicate whether there is a fault with the mechanical connection, such that inspection is recommended/required. The machine learning model may be trained to provide its output based on a set of training data, for example a set of training data labelled with ground truth values in a supervised learning process. For example, a plurality of acoustic signals with known fault conditions may be used to train the machine learning model. In another example, measured data may form a training data set. In some examples, the machine learning model may be updated in real-time based on data obtained by the method.

The machine learning model may comprise a classifier. The classifier may provide a binary output for the fault condition. The classifier may be configured to determine whether the mechanical connection requires inspection, based on the information indicative of the acoustic signal. The output of the classifier may be whether or not inspection of the mechanical connection is required. The machine learning model may comprise a neural network.

The method may comprise training the machine learning model using training data, wherein the training data comprises information indicative of a plurality of acoustic signals with known fault conditions. Training the machine learning model in this way may enable a more accurate determination of the fault condition of a given acoustic signal.

The output provided by the machine learning model may be indicative of whether inspection of the mechanical connection is required. This may allow an operator to be provided with a clear indication of whether or not inspection is required. This may help to speed up the securing process as only those mechanical connections indicated by the machines learning model to be in need of inspection are inspected.

The information indicative of the acoustic signal may comprise a sound signature of an acoustic signal emitted by the securing device during the securing the first aircraft component to the second aircraft component. The sound signature may comprise various properties that make up the acoustic signal, such as frequency, tone, pitch, loudness or duration. The acoustic signal emitted by the securing device during the securing the first aircraft component to the second aircraft component may be indicative of whether there is a fault in the mechanical connection between the first aircraft component and the second aircraft component. For example, the securing device may make a sound with a first characteristic when the first aircraft component is secured to the second aircraft component correctly, and may make a second, different, sound when the first aircraft component is secured to the second aircraft component incorrectly. The sound emitted by the securing device may also be indicative of a characteristic of the securing device. For example, the sound emitted by the securing device may be indicative of an amount of wear on a part of the securing device and may indicate when service of the securing device is required. This may allow the securing device to be serviced before failing, which may reduce downtime. The sound signature may comprise a pitch of the acoustic signal. The sound signature may comprise a duration of the acoustic signal.

The securing device may comprise a tool for securing the first aircraft component to the second aircraft component. The securing device may comprise an impact driver, a spanner, a drill, a hex key, a screwdriver or any other suitable tool.

The method may comprise securing, using the securing device, the first aircraft component to the second aircraft component by applying a fastener between the first aircraft component and the second aircraft component. The fastener may comprise a nut, a bolt, a screw, a wire, a rivet, a nail or any other suitable fastener.

The first aircraft component may be secured to the second aircraft component by a single-sided fastener. This may allow the fastener to be secured from a single side of the fastener.

The method may comprise securing, using the securing device, the first aircraft component to the second aircraft component during an aircraft assembly process.

According to a second aspect of the present invention, there is provided a system for securing a first aircraft component to a second aircraft component comprising: a securing device configured to secure the first aircraft component to the second aircraft component with a mechanical connection in use; a microphone configured to receive an acoustic signal emitted by the securing device in use; and a control module comprising a memory storing a machine learning model configured to receive an input from the microphone and output information indicative of a fault condition of the mechanical connection.

The system allows the fault condition of the mechanical connection to be determined without the need to manually inspect the mechanical connection. The fault condition may be that the mechanical connection has not been installed correctly and therefore requires inspection. An operator may only need to inspect the mechanical connections which are determined to have faults, which may speed up the securing process.

The securing device may comprise a tool for securing the first aircraft component to the second aircraft component. The securing device may comprise an impact driver, a spanner, a drill, a hex key, a screwdriver or any other suitable tool.

The securing device may be configured to secure the first aircraft component to the second aircraft component by applying a fastener between the first aircraft component and the second aircraft component. The fastener may comprise a nut, a bolt, a screw, a wire, a rivet, a nail or any other suitable fastener.

The securing device may be configured to secure the first aircraft component to the second aircraft component during an aircraft assembly process.

The memory may comprise instructions which, when executed, cause the system to carry out the method according to the first aspect of the present invention.

According to a third aspect of the present invention, there is provided a method of determining a characteristic of a mechanical connection between a first aircraft component and a second aircraft component, the method comprising: securing, using a securing device, the first aircraft component to the second aircraft component; monitoring a property of the securing device while securing the first aircraft component to the second aircraft component; monitoring an acoustic signal emitted while securing the first aircraft component to the second aircraft component; and determining, based on the property of the securing device and the acoustic signal, whether inspection of the mechanical connection is required.

This method may allow a characteristic of a mechanical connection to be determined without the need for physical or visual inspection. This may speed up the manufacturing process as the mechanical connections do not all need to be manually inspected. The property of the securing device may imply a characteristic of the mechanical connection, such as a quality of the mechanical connection between the first aircraft component and the second aircraft component. As the method may allow the characteristic of the mechanical connection to be determined without visual inspection of the mechanical connection, it may also be possible to determine the characteristic of the mechanical connection when the mechanical connection is in a location which does not allow for visual inspection (e.g. if the connection is occluded).

Determining whether inspection of the mechanical connection is required may comprise comparing the property of the securing device against a property threshold and comparing the acoustic signal against an acoustic signal threshold. If the property of the securing device differs from the property threshold by less than a predetermined amount, this may indicate that the connection between the first aircraft component and the second aircraft component meets desired requirements, and does not require manual inspection (e.g. by physical and/or visual inspection). Comparing the acoustic signal against an acoustic signal threshold may help to verify the comparison between the property of the securing device and the property threshold, and may reduce the likelihood of false positives occurring (where the comparison between property of the securing device and the property threshold incorrectly indicates that the connection meets the desired requirement, when it does not).

The method may comprise providing an indication if the acoustic signal differs from the acoustic signal threshold by greater than a predetermined amount. The acoustic signal threshold may be a threshold at which it is recommended that the mechanical connection is manually inspected, e.g. when the connection between the first aircraft component and the second aircraft component does not meet the desired requirements. Providing the indication when the acoustic signal exceeds the acoustic signal threshold may allow an operator to be quickly and easily informed when the mechanical connection requires inspection. The acoustic signal threshold may be determined from a bank of acoustic signals related to known characteristics of the mechanical connection.

The indication may comprise an audible signal. The audible signal may allow the operator to be quickly and easily alerted to the need to inspect the mechanical connection. The audible signal may be an alarm and/or may comprise spoken instructions comprising actions to be taken. The indication may comprise a visual indicator. The visual indicator may allow the indication to be seen by the operator, even when in a noisy environment. The visual indicator may comprise a display on a screen showing that the acoustic signal threshold has been exceeded. The visual indicator may include information indicative of the acoustic signal. This may allow the user to confirm whether manual inspection of the mechanical connection is required. For example, if the acoustic signal is within a margin of error, the operator may determine that no manual inspection is required.

Comparing the acoustic signal against the acoustic signal threshold may comprise comparing a sound signature of the acoustic signal against the acoustic signal threshold. The sound signature may comprise various properties that make up the acoustic signal, such as frequency, tone, pitch, loudness or duration. The sound signature of the acoustic signal may comprise at least one of: a pitch of the acoustic signal or a duration of the acoustic signal.

Determining whether inspection of the mechanical connection is required may comprise inputting information indicative of the acoustic signal into a machine learning model, wherein the machine learning model is configured to provide an output indicative of a fault condition. The machine learning model may comprise the information indicative of the acoustic signal as an input, and the fault condition as an output. Such a machine learning model may be trained to provide its output based on a set of training data, for example a set of training data labelled with ground truth values in a supervised learning process. For example, a plurality of acoustic signals with known fault conditions may be used to train the machine learning model. In another example, measured data may form a training data set. In some examples, the machine learning model may be updated in real-time based on data obtained by the method. In some examples, the machine learning model may comprise a neural network.

The property of the securing device may comprise an electrical current provided to the securing device. The electrical current may be indicative of a power being applied to/used by the securing device. An increase or decrease in electrical current may be indicative of a defect or inconsistency in the mechanical connection between the first and second components.

The property of the securing device may comprise a torque applied by the securing device. An increase or decrease in torque may be indicative of a defect or inconsistency in the mechanical connection between the first and second components.

The acoustic signal may comprise a sound emitted by the securing device while securing the first aircraft component to the second aircraft component. The sound emitted by the securing device while securing the first aircraft component to the second aircraft component may be indicative of a quality of the mechanical connection between the first aircraft component and the second aircraft component. For example, the securing device may make a sound with a first characteristic when the first aircraft component is secured to the second aircraft component correctly, and may make a second, different, sound when the first aircraft component is secured to the second aircraft component incorrectly. The sound emitted by the securing device may also be indicative of a characteristic of the securing device. For example, the sound emitted by the securing device may be indicative of an amount of wear on a part of the securing device and may indicate when service of the securing device is required. This may allow the securing device to be serviced before failing, which may reduce downtime.

The first aircraft component may be secured to the second aircraft component by a fastener and the acoustic signal may comprise a sound emitted by the fastener while securing the first aircraft component to the second aircraft component. The sound emitted by the fastener may have a different characteristic dependent on whether the fastener has been secured correctly or not. As such, monitoring the sound emitted by the fastener may indicate whether the fastener has been applied correctly. The acoustic signal may comprise sound emitted by the first aircraft component and/or the second aircraft component. The fastener may comprise a single-sided fastener. This may allow the fastener to be secured from a single side of the fastener.

The acoustic signal may be monitored by an acoustic sensor attached to the securing device. Providing an acoustic sensor on the securing device may help to ensure that the acoustic signal is monitored from the same position during each subsequent securing of the first aircraft component to the second aircraft component. This may help to improve consistency of the determination of the characteristic of the mechanical connection between the first aircraft component and the second aircraft component.

The securing device may comprise a tool for securing the first aircraft component to the second aircraft component. The securing device may comprise an impact driver, a spanner, a drill, a hex key, a screwdriver or any other suitable tool.

### BRIEF DESCRIPTION OF THE DRAWINGS

Embodiments of the invention will now be described, by way of example only, with reference to the accompanying drawings, in which:
Figure 1 shows a schematic view of a system for securing a first aircraft component to a second aircraft component;
Figure 2 shows a flow diagram of a method of monitoring a mechanical connection between the first aircraft component and the second aircraft component; and
Figure 3 shows a flow diagram of a method of determining a characteristic of the mechanical connection between the first aircraft component and the second aircraft component.

### DETAILED DESCRIPTION

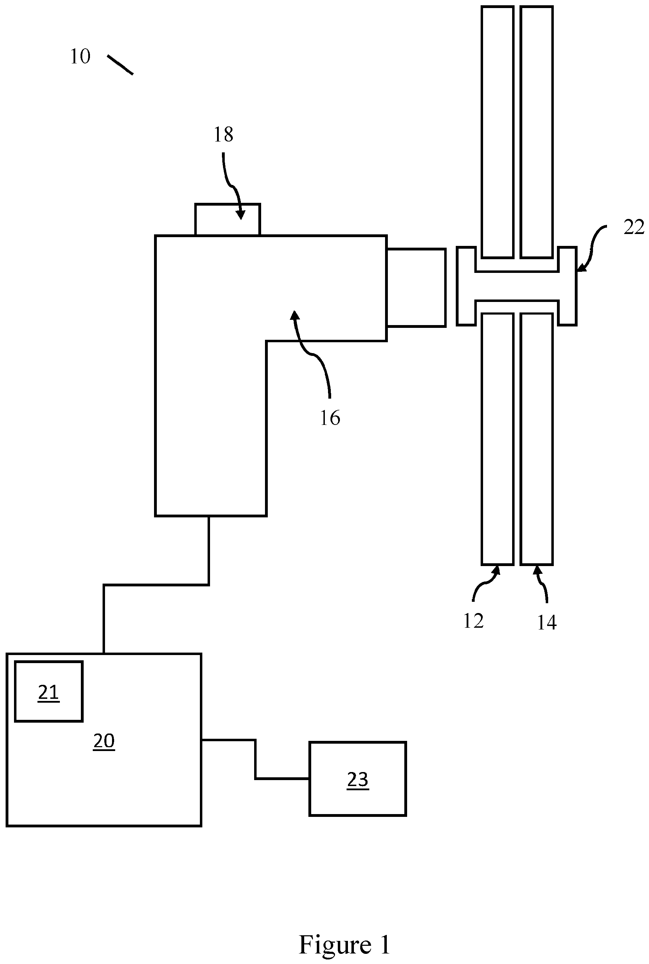

As shown in Figure 1, a system 10 for securing a first aircraft component 12 to a second aircraft component 14 comprises a securing device 16 (in this example an impact driver), a microphone 18, a control module 20 and a display 23.

In use, the securing device 16 applies a fastener 22 to the first aircraft component 12 and the second aircraft component 14, to form a mechanical connection between the first aircraft component 12 to the second aircraft component 14. The fastener 22 may be a single-sided fastener, such that the fastener 22 is secured (e.g. tightened) from a single side of the fastener 22 (e.g. from the part of the fastener 22 to the left side of the first aircraft component 12 in Figure 1). For example, the first aircraft component 12 may be a cover of a wing and the second aircraft component 14 is a rib of the wing. In other examples, the second aircraft component 14 is a spar flange.

The control module 20 is in communicate with the securing device 16, the microphone 18 and the display 23. The control module 20 comprises a memory 21, on which is stored a machine learning model. The machine learning model is configured to receive information from the securing device 16 and/or the microphone 18, and to output a fault condition which indicates whether inspection of the mechanical connection is required.

Machine learning models in the present context may be considered to be the output of a machine learning training process that typically employs a machine learning algorithm that learns from a training dataset. A machine learning model typically comprises both data and procedures that employ the data to process inputs and produce outputs.

The machine learning model used in the examples herein is a classifier in the form of an artificial neural network or simply a 'neural network'. A neural network includes a number of interconnected nodes, which may be referred to as artificial neurons, or neurons. The internal state of a neuron (sometimes referred to as an "activation" of the neuron) depends on an input received by the neuron. The value of data applied to each input is weighted, summed, and applied to an "activation function" that sums the weighted inputs in order to determine the output of the neuron. The activation function also has a "bias" that controls the output of the neuron by providing a threshold to the neuron's activation. The output of the neuron then depends on the input, weight, bias, and the activation function. The output of some neurons is connected to the input of other neurons, forming a directed, weighted graph in which vertices (corresponding to neurons) or edges (corresponding to connections) of the graph are associated with weights, respectively. The neurons may be arranged in layers such that information may flow from a given neuron in one layer to one or more neurons in a successive layer of the neural network.

Training of the neural network is important to ensure that a high degree of accuracy is met. Examples of "trainable parameters" of the neural network are the weights, the biases, and the neuron connections that are "learnt", or in other words, capable of being trained, during a neural network "training" process.

The process of training a neural network includes automatically adjusting the weights that connect the neurons in the neural network, as well as the biases of activation functions controlling the outputs of the neurons. The neural network is presented with a training dataset which includes training input data that has a known classification. In the examples herein, the input training data includes acoustic signals detected by the microphone 18 that have been classified with a fault condition (i.e. indicating whether there is a fault with the mechanical connection such that inspection is required). The training dataset is gathered from observations made during previous connections between the first aircraft component 12 and the second aircraft component 14. The training process automatically adjusts the weights and the biases, such that when presented with input data, the neural network accurately provides the corresponding output. While the training described herein is supervised, in other examples the training may be unsupervised (such that only input training data are provided).

The display 23 is configured to visually display the fault condition (or information indicative of the fault condition), so as to provide a visual indication of whether inspection of the mechanical connection is required. Although the display 23 is shown remote from the securing device 16 in Figure 1, in some examples the display 23 is part of the securing device 16.

To ensure a good mechanical connection between the first aircraft component 12 and the second aircraft component 14, it is desirable to determine a characteristic (e.g. a quality) of the mechanical connection. While this may be achieved by visual and/or physical inspection of the mechanical connection (e.g. including of the fastener 22), such inspection may be difficult when the fastener 22 is applied in a location which is not easily accessible. Moreover, it may be arduous and slow to visually inspect every mechanical connection between the first aircraft component 12 and the second aircraft component 14, which may add unnecessary delays to the assembly process. The system 10 of Figure 1 provides an additional way in which to determine a characteristic of the mechanical connection and determine whether inspection is required.

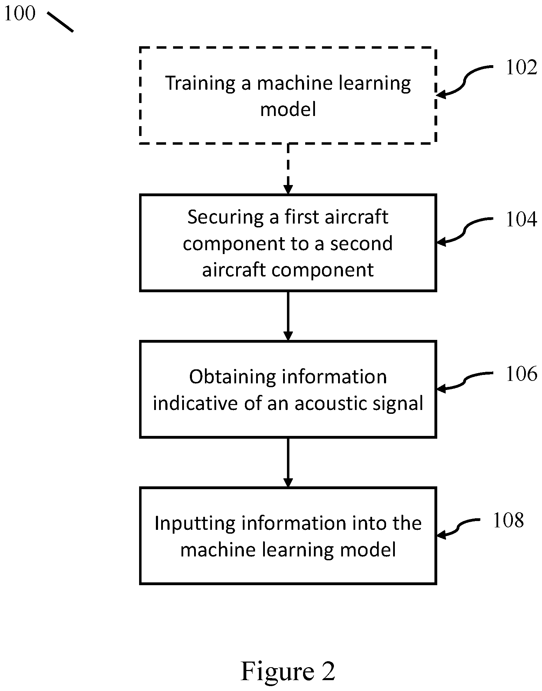

Figure 2 shows a flow diagram illustrating a method 100 of monitoring the mechanical connection between the first aircraft component 12 and the second aircraft component 14, e.g. using the system 10 of Figure 1. The method 100 comprises training 102 the machine learning model stored on the control module 20 using the training dataset as discussed above. In some examples, the step of training the machine learning model may be omitted, for example if the machine learning model has already been trained.

The method comprises securing 104 the first aircraft component 12 to the second aircraft component 14 by using the securing device 16 to apply the single-sided fastener 22. While the fastener 22 is being applied, information indicative of an acoustic signal emitted by the securing device 16, such as a sound signature (including pitch and duration) of a sound made by the securing device 16, is obtained 106 by the microphone 18.

The information indicative of the acoustic signal is input 108 into the machine learning model stored on the control module 20, and the machine learning model outputs a fault condition of the mechanical connection. The fault condition indicates whether there is a fault with the mechanical connection and whether inspection of the mechanical connection is required. The output of the machine learning algorithm is shown on the display 23, to allow an operator to quickly and easily see if inspection of the mechanical connection is required. In some examples the display 23 is omitted. In other examples, an audible indicator (such as a warning emitted from a speaker) is provided in addition to, or instead of, the display 23.

The method of Figure 2 may allow the fault condition to be determined without the need to manually inspect each mechanical connection (e.g. through visual and/or physical inspection). This may speed up the securing process, and therefore the overall assembly process.

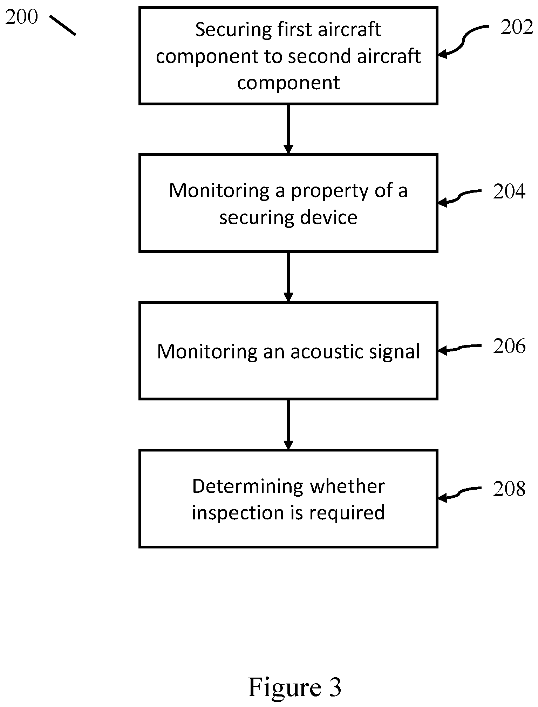

Figure 3 shows a flow diagram of a method 200 of determining a characteristic of the mechanical connection between the first aircraft component 12 and the second aircraft component 14, e.g. using the system 10 of Figure 1. The method comprises securing 202 the first component 12 to the second component 14 using the securing device 16. The securing device applies the fastener 22 between the first aircraft component 12 and the second aircraft component 14 to secure the first aircraft component 12 to the second aircraft component 14.

While securing the first aircraft component 12 to the second aircraft component 14, the method comprises monitoring 204 a property of the securing device 16. In this example, the property is a torque applied by the securing device 16 to the fastener 22, although the property could be another property of the securing device 16, such as current supplied to/used by the securing device 16. The torque applied by the securing device 16 changes dependent on whether the fastener 22 is applied correctly or not. Therefore, the torque of the securing device 16 may be used to imply whether the fastener 22 has been applied correctly, and therefore whether inspection of the mechanical connection is required.

The method 200 further comprises monitoring 206 an acoustic signal emitted by the securing device 16 while securing the first aircraft component 12 to the second aircraft component 14. The acoustic signal is monitored by the microphone 18 attached to the securing device 16. The acoustic signal emitted by the securing device 16 may differ, e.g. in pitch or duration, depending on whether there is a fault with the mechanical connection (e.g. if the fastener 22 has been applied incorrectly). Therefore, the acoustic signal can be used, either together with or instead of the property of the securing device 16, to determine whether there is a fault, and therefore whether inspection of the mechanical connection is required.

To determine whether inspection of the mechanical connection is required, in a first example, the property of the securing device 16 is compared against a property threshold. The property threshold is a value of the property of the securing device 16 above which it is indicative of a fault with the mechanical connection. If the property of the securing device 16 differs from the property threshold by greater than a predetermined amount, an output is provided to indicate (e.g. to an operator) that inspection of the mechanical connection is required.

If the property of the securing device 16 differs from the property threshold by less than the predetermined amount, indicating that there is no fault and that the mechanical connection does not require inspection, the method 200 comprises comparing the acoustic signal against an acoustic signal threshold. The acoustic signal threshold is a value of the acoustic signal above which it is indicative of a fault with the mechanical connection. If the acoustic signal exceeds the acoustic signal threshold by greater than a predetermined amount, an output is provided to indicate that inspection of the mechanical connection is required. By comparing the acoustic signal against the acoustic signal threshold, even when the property of the securing device 16 does not differ from the property threshold by greater than the predetermined amount, provides an additional confirmation of whether inspection is required. This may help to reduce the chance of false positives occurring, such as where there is a fault with the mechanical connection, but the property of the securing device 16 indicates that no inspection of the mechanical connection is required.

In a second example, the acoustic signal (or information indicative of the acoustic signal, such as a sound signature including pitch and/or duration of the acoustic signal) is input into a machine learning model (such as the machine learning model discussed in relation to Figures 1 and 2) to determine whether the mechanical connection needs to be inspected.

The machine learning model is configured to provide a fault condition as an output, the fault condition indicating whether inspection of the mechanical connection is required. The fault condition is displayed on the display 23 (or other suitable device), so as to allow an operator to quickly and easily see whether inspection of the mechanical connection is required. In some examples, the fault condition is also, or alternatively, conveyed by way of an audio indicator (such as an alarm emitted by a speaker).

The method of Figure 3 may allow the fault condition to be determined without the need to manually inspect each mechanical connection (e.g. through visual and/or physical inspection), which may speed up the securing process, and therefore the overall assembly process.

It is to noted that the term "or" as used herein is to be interpreted to mean "and/or", unless expressly stated otherwise.

## Claims

1. A method of monitoring a mechanical connection between a first aircraft component and a second aircraft component, the method comprising:
securing, using a securing device, the first aircraft component to the second aircraft component;
obtaining information indicative of an acoustic signal emitted during the securing the first aircraft component to the second aircraft component; and
inputting the information indicative of the acoustic signal into a machine learning model, wherein the machine learning model is configured to provide an output indicative of a fault condition of the mechanical connection.

2. The method according to claim 1, comprising training the machine learning model using training data, wherein the training data comprises information indicative of a plurality of acoustic signals with known fault conditions.

3. The method according to claim 1 or claim 2, wherein the output provided by the machine learning model is indicative of whether inspection of the mechanical connection is required.

4. The method according to any one of claims 1 to 3, wherein the information indicative of the acoustic signal comprises a sound signature of an acoustic signal emitted by the securing device during the securing the first aircraft component to the second aircraft component.

5. The method according to claim 4, wherein the sound signature comprises a pitch of the acoustic signal and/or the sound signature comprises a duration of the acoustic signal.

6. The method according to any one of claims 1 to 5, comprising securing, using the securing device, the first aircraft component to the second aircraft component by applying a fastener between the first aircraft component and the second aircraft component.

7. The method according to any one of claims 1 to 6, wherein the first aircraft component is secured to the second aircraft component by a single-sided fastener.

8. The method according to any one of claims 1 to 7, comprising securing, using the securing device, the first aircraft component to the second aircraft component during an aircraft assembly process.

9. A system for securing a first aircraft component to a second aircraft component comprising:
a securing device configured to secure the first aircraft component to the second aircraft component with a mechanical connection in use;
a microphone configured to receive an acoustic signal emitted by the securing device in use; and
a control module comprising a memory storing a machine learning model configured to receive an input from the microphone and output information indicative of a fault condition of the mechanical connection.

10. The system according to claim 9, wherein the securing device is configured to secure the first aircraft component to the second aircraft component by applying a fastener between the first aircraft component and the second aircraft component.

11. A method of determining a characteristic of a mechanical connection between a first aircraft component and a second aircraft component, the method comprising:
securing, using a securing device, the first aircraft component to the second aircraft component;
monitoring a property of the securing device while securing the first aircraft component to the second aircraft component;
monitoring an acoustic signal emitted while securing the first aircraft component to the second aircraft component; and
determining, based on the property of the securing device and the acoustic signal, whether inspection of the mechanical connection is required.

12. The method according to claim 11, wherein determining whether inspection of the mechanical connection is required comprises comparing the property of the securing device against a property threshold and comparing the acoustic signal against an acoustic signal threshold, optionally comprising providing an indication if the acoustic signal differs from the acoustic signal threshold by greater than a predetermined amount.

13. The method according to claim 11 or claim 12, wherein the property of the securing device comprises at least one of: an electrical current provided to the securing device and a torque applied by the securing device.

14. The method according to any one of claims 11 to 13, wherein the acoustic signal comprises a sound emitted by the securing device while securing the first aircraft component to the second aircraft component.

15. The method according to any one of claims 11 to 14, wherein the first aircraft component is secured to the second aircraft component by a fastener and the acoustic signal comprises a sound emitted by the fastener while securing the first aircraft component to the second aircraft component, optionally wherein the fastener comprises a single-sided fastener.
